# EUROPÄISCHE PATENTSCHRIFT

(11) **EP 1 385 177 B1**
(45) Veröffentlichungstag und Bekanntmachung des Hinweises auf die Patenterteilung: **03.07.2013**
(21) Anmeldenummer: 03016367.9
(22) Anmeldetag: 19.07.2003
(51) Int. Cl.: H02G 3/04, B60R 16/02, H01B 7/32, H02H 5/04

(54) **Leitungsanordnung für Bordnetze von Fahrzeugen**
Circuit arrangement for electrical network on board a vehicle
Système de conduits pour un réseau de véhicule

(30) Priorität: 23.07.2002 DE 10234389
(43) Veröffentlichungstag der Anmeldung: 28.01.2004
(73) Patentinhaber: Sumitomo Electric Bordnetze GmbH, 38444 Wolfsburg (DE)
(72) Erfinder: Virgin, Jean-Marc Karl Edgard Maurice, 50829 Köln (DE); Ehrhardt, Jörg, 72622 Nürtingen (DE)
(74) Vertreter: Gulde Hengelhaupt Ziebig & Schneider

(56) Entgegenhaltungen:
- EP-A- 0 728 622
- WO-A-03/007450
- DE-A- 10 017 455
- JP-A- 07 141 920
- US-A- 5 541 803

## Beschreibung

Die Erfindung betrifft eine Leitungsanordnung für Bordnetze von Fahrzeugen, umfassend eine von einem Stromeinspeiseanschluß zu einem Stromabgabeanschluß verlaufende elektrische Versorgungsleitung mit mindestens einem stromführenden Innenleiter und mindestens einem diesen umgebenden Schutzmantel.

Derartige Leitungsanordnungen sind aus der Fahrzeugtechnik bekannt.

Wird die elektrische Versorgungsleitung mit Spannungen betrieben, die über 12 Volt, vorzugsweise über 20 Volt, liegen, so besteht ein latentes Gefahrenpotential dann, wenn der Innenleiter einen Defekt aufweist oder wenn der Schutzmantel Schaden nimmt, da sich dann über den Defekt des Innenleiters hinweg oder, ausgehend von dem Innenleiter zu einem beliebigen Teil des Fahrzeugs, insbesondere zu einem auf Masse liegenden Teil des Fahrzeugs, jeweils ein Lichtbogen ausbilden kann, welcher eine erhebliche Brandgefahr darstellt.

Der Erfindung liegt daher die Aufgabe zugrunde, eine Leitungsanordnung der gattungsgemäßen Art derart zu verbessern, daß bei Ausbildung eines Lichtbogens schnell Abhilfe geschaffen werden kann.

Diese Aufgabe wird bei einer Leitungsanordnung der eingangs beschriebenen Art erfindungsgemäß dadurch gelöst, daß ein längs der Versorgungsleitung verlaufendes Detektorelement vorgesehen ist, welches aus einem Material besteht, dessen elektrische und/oder optische Leitfähigkeit. Verhalten beim Auftreten eines vom stromführenden Innenleiter ausgehenden lokalen Lichtbogens aufgrund eines lokalen Eintrag einer vom Lichtbogen erzeugten Wärmemenge irreversibel verändert wird, Eine mit dem Stromeinspeiseanschluß verbundene Trennschaltung ist vorgesehen , welche bei Veränderung des elektrischen und/oder optischen Verhaltens des Detektorelements den stromführenden Innenleiter von einer Stromquelle trennt.

Der Vorteil der erfindungsgemäßen Lösung ist darin zu sehen, daß diese die Möglichkeit schafft, unmittelbar nach Auftreten eines vom stromführenden Innenleiter ausgehenden Lichtbogens diesen zu erkennen und dadurch Abhilfe zu schaffen, daß der stromführende Innenleiter von der Stromquelle getrennt wird, so daß der Lichtbogen sofort erlischt und keinerlei weitere Schäden von dem Lichtbogen ausgehen können.

Ferner bietet die Anordnung auch noch einen mechanischen Schutz vor direktem Kontakt zwischen der räumlich umhüllten innenliegenden Versorgungsleitung mit einer Spannung größer 20 Volt und anderen räumlich außerhalb der Leitungsanordnung liegenden Potentialen. Die Wahrscheinlichkeit eines Kurzschlusses zwischen der räumlich innenliegenden Versorgungsleitung und den räumlich außenliegenden Potentialen wird somit stark verringert. Außenliegende Systeme mit geringerer Spannung können beispielsweise dadurch vor den Auswirkungen einer Potentialanhebung durch die Versorgungsleitung geschützt werden.

Hinsichtlich der Veränderung des Verhaltens des Detektorelements bei Auftreten des Lichtbogens sind die unterschiedlichsten Möglichkeiten denkbar. Erfindungsgemäß ist lediglich erforderlich, daß eine signifikante irreversible Veränderung des elektrischen und/oder optischen Verhaltens eintritt. Beispielsweise könnte der Fall eintreten, daß sich bei der lokalen Einwirkung des Lichtbogens die elektrischen und/oder optischen Eigenschaften verbessern.

Besonders vorteilhaft ist es jedoch, wenn das Detektorelement bei lokaler thermischer Einwirkung sein elektrisches und/oder optisches Verhalten irreversibel verschlechtert. Damit läßt sich das Detektorelement besonders einfach und zweckmäßig ausbilden.

Insbesondere läßt sich das Detektorelement dann besonders einfach und zweckmäßig ausbilden, wenn dieses bei lokaler thermischer Einwirkung seine Fähigkeit elektrische und/oder optische Signale durchzuleiten irreversibel verschlechtert.

Prinzipiell wäre es denkbar, das Detektorelement so auszubilden, daß es auch auf eine Fernwirkung eines Lichtbogens mit einer Veränderung seines elektrischen und/oder optischen Verhaltens reagiert.

Um sicherzustellen, daß das Detektorelement in jedem Fall einen sich ausbildenden Lichtbogen erfaßt, ist vorzugsweise vorgesehen, daß das Detektorelement die Versorgungsleitung umgibt.

Hinsichtlich der Ausbildung des Detektorelements sind die unterschiedlichsten Lösungen denkbar.

Beispielsweise wäre es denkbar, das Detektorelement aus einem Flachmaterialstück auszubilden, dessen elektrische und/oder optische Eigenschaften beim Auftreten eines Lichtbogens verändert werden.

Besonders günstig ist eine Lösung jedoch dann, wenn das Detektorelement mindestens eine elektrische und/oder optische Leitung als Detektorleitung umfaßt, deren elektrisches und/oder optisches Verhalten bei Auftreten des Lichtbogens irreversibel verändert wird.

Ein vorteilhaftes Ausführungsbeispiels der erfindungsgemäßen Detektorleitung sieht dabei vor, daß die Detektorleitung in Form einer Wendel verläuft.

Eine andere alternative Lösung hierzu sieht vor, daß die Detektorleitung in Form von Mäandern verläuft, wobei die Mäander dann vorzugsweise in einer die Versorgungsleitung zumindest teilweise, noch besser im wesentlichen umschließenden Fläche liegen.

Neben der Ausführung der Detektorleitung als Wendel oder als Mäander sind aber auch noch andere Möglichkeiten denkbar. Beispielsweise wäre es denkbar, die Detektorleitung in Form eines Netzes oder eines Gewebes auszuführen.

Um möglichst umfassend einen an der Versorgungsleitung entstehenden Lichtbogen erkennen zu können, ist vorzugsweise vorgesehen, daß in Längsrichtung der Versorgungsleitung aufeinanderfolgende und quer zu einer Längsrichtung der Versorgungsleitung verlaufende Abschnitte der Detektorleitung einen Abstand voneinander aufweisen, der kleiner ist als der doppelte Durchmesser des Innenleiters.

Mit dieser Lösung ist sichergestellt, daß bei Ausbildung eines Lichtbogens mit großer Wahrscheinlichkeit mindestens ein derartiger Abschnitt der Detektorleitung in einem vom Lichtbogen durchsetzten Bereich liegt.

Hinsichtlich der Ausbildung der Detektorleitung sind ebenfalls die unterschiedlichsten Möglichkeiten denkbar. So wäre es beispielsweise denkbar, die Detektorleitung aus einem Material herzustellen, welches sein elektrisches und/oder optisches Verhalten aufgrund der bei einem Lichtbogen entstehenden Strahlung verändert.

Besonders günstig ist es jedoch, wenn die Detektorleitung aus einem Material besteht, das ein elektrisches und/oder optisches Verhalten bei einem lokalen Eintrag einer von dem Lichtbogen erzeugten Wärmemenge irreversibel verändert. Das heißt, daß die vom Lichtbogen entstehenden Wärme Ursache für die irreversible Änderung des elektrischen und/oder optischen Verhaltens ist.

Um einerseits sicherzugehen, daß die Detektorleitung ihr elektrisches und/oder optisches Verhalten nicht bereits bei üblichen Betriebszuständen eines Fahrzeugs und den entsprechenden Temperaturen ändert, jedoch möglichst schnell auf einen sich ausbildenden Lichtbogen anspricht, ist vorzugsweise vorgesehen, daß die Detektorleitung aus einem Material besteht, das ein elektrisches und/oder optisches Verhalten bereits ab einer Schwellentemperatur, die im Bereich von ungefähr 100°C bis ungefähr 500°C liegt, irreversibel verändert.

Um die Detektorleitung zu schützen ist vorzugsweise vorgesehen, daß diese von einer isolierenden Schutzhülle umgeben ist.

Hinsichtlich des Aufbaus des Detektorelements mit der Detektorleitung sind die unterschiedlichsten Möglichkeiten denkbar. Eine besonders günstige Lösung sieht vor, daß das Detektorelement einen Träger aufweist, an oder in welchem die Detektorleitung gehalten ist.

Diese Lösung ist insbesondere vorgesehen für Fälle, in denen die Detektorleitung draht- oder faserähnlich ausgeführt ist.

Eine andere bevorzugte Lösung sieht vor, daß die Detektorleitung in Form von Leitungsbahnen auf einem Träger angeordnet ist.

In diesem Fall ist vorzugsweise vorgesehen, daß die Detektorleitung auf den Träger in Form eines Druck- oder Beschichtungsverfahrens aufgebracht ist und somit die Integrität des Trägers notwendig ist, um die Integrität der Detektorleitung Aufrecht zu erhalten.

Beispielsweise kann die Detektorleitung vorzugsweise eine aufgedampfte Metallisierung oder ein aufgetragenes leitendes, beispielsweise pulverförmiges Material oder ein aufgetragenes optische Signale leitendes Material sein.

Der Träger kann dabei beispielsweise als schlauchartige Hülle ausgebildet sein, welche die Versorgungsleitung umschließt, oder als beispielsweise im Querschnitt C-förmig die Versorgungsleitung umschließendes Element.

Eine andere vorteilhafte Lösung sieht vor, den Träger als Trägerstreifen auszubilden, welcher wendelförmig die Versorgungsleitung umschließt.

Um in jedem Fall einen auftretenden Lichtbogen erkennen zu können, ist vorzugsweise vorgesehen, daß der Träger die Versorgungsleitung zumindest teilweise umgibt.

Beim Vorsehen mehrere Trägerstreifen ist es denkbar, daß jeder Trägerstreifen die Versorgungsleitung teilweise umgibt, die Summe aller Trägerstreifen die Versorgungsleitung vollständig umschließt.

Dies läßt sich beispielsweise dadurch realisieren, daß zwei nebeneinanderliegende Trägerstreifen in mit gleicher Wickelrichtung wendelförmig um die Versorgungsleitung gewickelt sind.

Eine alternative Lösung hierzu sieht vor, daß zwei Trägerstreifen über Kreuz, das heißt mit entgegengesetztem Wickelsinn, wendelförmig um die Versorgungsleitung gewickelt sind und sich somit stellenweise überdecken.

Vorzugsweise ist vorgesehen, daß der Träger die Versorgungsleitung im wesentlichen vollständig umschließt.

Um die Detektorleitung zu schützen, ist vorzugsweise vorgesehen, daß der Träger Teil einer Schutzhülle für die Detektorleitung bildet.

Der Träger kann dabei aus den unterschiedlichsten Materialien bestehen.

Beispielsweise ist der Träger ein möglichst gegen thermische oder andere Einwirkungen resistentes Material.

Der Träger kann aber auch dazu eingesetzt werden, um zur Veränderung des elektrischen und/oder optischen Verhaltens des Detektorelements beizutragen.

So sieht ein vorteilhaftes Ausführungsbeispiel vor, daß der Träger aus einem Material ist, das sich bei lokaler Einwirkung des von dem Innenleiter ausgehenden Lichtbogens irreversibel verändert.

Die Veränderungen können dabei beliebig sein, beispielsweise kann das Material so gewählt sein, daß der Träger zumindest einen Teil seiner mechanischen Eigenschaften verändert.

Eine andere günstige Lösung sieht vor, daß der Träger aus einem Material besteht, daß sich bei Einwirkung des von dem Innenleiter ausgehenden Lichtbogens irreversibel verformt.

Das heißt, daß bei dieser Lösung ein aktives Verhalten des Trägers vorgesehen ist, welches gleichzeitig auch auf die Detektorleitung einwirkt, in dem Sinne, daß sich deren elektrisches und/oder optisches Verhalten durch die Formänderung des Trägers verändert.

Eine weitere vorteilhafte Ausführung eines auf die Ausbildung eines Lichtbogens reagierenden Trägers sieht vor, daß der Träger aus einem Material besteht, daß bei Einwirkung des von dem Innenleiter ausgehenden Lichtbogens irreversibel zerfällt.

Eine weitere vorteilhafte Lösung sieht vor, daß der Träger aufgrund seiner irreversiblen Veränderung bei lokaler Einwirkung des Lichtbogens das elektrische und/oder optische Verhalten der Detektorleitung irreversibel beeinträchtigt.

Eine derartige irreversible Beeinträchtigung der Detektorleitung ist bereits dadurch möglich, daß die Veränderung des Trägers zu auf die Detektorleitung wirkenden mechanischen Kräften führt, die das elektrische und/oder optische Verhalten der Detektorleitung verändern.

Beispielsweise können dies bei einer optischen Detektorleitung mechanische Spannungen sein, welche das optische Verhalten eines optischen Leiters beeinflussen.

Die einfachste Lösung ist jedoch die, daß der Träger aufgrund seiner irreversiblen Veränderung die Detektorleitung lokal unterbricht. Dies ist insbesondere dann realisierbar, wenn der Träger aufgrund der lokalen Einwirkung des Lichtbogens entweder seine Integrität und Stabilität verliert und dadurch als mechanische Stabilisierung der Detektorleitung entfällt, so daß die Detektorleitung selbst instabil wird und unterbrochen wird, oder große mechanische Kräfte freisetzt, die dann auf die Detektorleitung einwirken und diese unterbrechen.

Im Zusammenhang mit der bisherigen Erläuterung der einzelnen Ausführungsbeispiele wurde lediglich erörtert, daß das Detektorelement sein elektrisches und/oder optisches Verhalten beim Auftreten des Lichtbogens irreversibel verändert.

Um auch mechanische Beschädigungen der Leitungsanordnung über dasselbe Detektorelement feststellen zu können, ist vorzugsweise vorgesehen, daß das Detektorelement sein elektrisches und/oder optisches Verhalten bei mechanischer Beschädigung irreversibel verändert.

Ein besonders vorteilhaftes Ausführungsbeispiel sieht vor, daß das Detektorelement sein elektrisches und/oder optisches Verhalten bei mechanischer Beschädigung desselben durch ein auf detektorleitungsfremdem Potential liegendes mechanisches Bauteil verändert.

Dies ist insbesondere beim Einsatz der Leitungsanordnung in Kraftfahrzeugen von Bedeutung, da bei diesen die mit der Karosserie verbundenen mechanischen Teile alle auf Masse liegen und somit bei einer Beschädigung des Detektorelements mit einem derartigen Teil eine hohe Wahrscheinlichkeit dafür besteht, daß zumindest bei Fortsetzung der Beschädigung ein Lichtbogen zwischen dem Innenleiter und diesem auf Masse liegenden Teil entstehen kann.

Die Tatsache, daß mit dem Detektorelement ein derartiges, auf einem detektorsorgungsleitungsfremdem Potential liegendes Bauteil erkannt werden kann, schafft somit die Möglichkeit, zumindest teilweise vor Ausbildung eines Lichtbogens bereits die Versorgungsleitung von der Stromquelle zu trennen und somit die durch einen Lichtbogen auftretenden Gefahren von vornherein zu vermeiden.

Für den Fall, daß das Detektorelement mit einer Detektorleitung versehen ist, ist vorzugsweise vorgesehen, daß auch die Detektorleitung ihr elektrisches und/oder optisches Verhalten bei mechanischer Beschädigung des Detektorelements irreversibel verändert.

Besonders günstig läßt sich dies dann realisieren, wenn die Detektorleitung ihr Verhalten hinsichtlich der Durchleitung elektrischer und/oder optischer Signale bei mechanischer Beschädigung irreversibel verschlechtert.

Hinsichtlich der Realisierungsformen eines Detektorelements, welches auf ein auf detektorleitungsfremdem Potential liegendes Bauteil reagiert, wurden bislang keine näheren Angaben gemacht. So ist vorzugsweise vorgesehen, daß die Detektorleitung in einem detektorleitungsspezifischen Stromkreis liegt, so daß eine Berührung der Detektorleitung mit einem auf einem detektorleitungsfremden Potential liegenden mechanischen Bauteil erfaßt werden kann, da damit der detektorleitungsspezifische Stromkreis gestört ist.

Um die verschiedenen vom Detektorelement erfaßten Zustände günstig auswerten zu können, ist vorzugsweise mindestens eine Detektorschaltung vorgesehen, welche die Trennschaltung ansteuert.

Die Detektorschaltung arbeitet dabei vorzugsweise so, daß sie das elektrische und/oder optische Verhalten des Detektorelements, insbesondere der Detektorleitung desselben, ständig überprüft und bei einer irreversiblen Veränderung dieses Verhaltens die Trennschaltung derart ansteuert, daß diese die Versorgungsleitung von der Stromquelle trennt.

Die Detektorschaltung kann dabei vom Grundsatz her an beliebigen Stellen der Leitungsanordnung vorgesehen sein, so lange eine Kommunikation mit der Trennschaltung sichergestellt ist.

Eine vorteilhafte Lösung sieht vor, die mindestens eine Detektorschaltung dem Stromeinspeiseanschluß zuzuordnen, da damit in einfacher Weise eine Kommunikation mit der Trennschaltung realisierbar ist.

Es ist aber auch denkbar, die mindestens eine Detektorschaltung dem Stromabgabeanschluß zuzuordnen.

Eine weitere vorteilhafte Lösung sieht vor, daß mehrere Detektorschaltungen vorgesehen sind, die miteinander kommunizieren. Im Fall mehrerer Detektorschaltungen ist es möglich, eine Leitungsanordnung nicht nur an einer sondern an mehreren Stellen zu überprüfen.

Die Detektorschaltungen können dabei mit in unterschiedlichster Art und Weise miteinander und auch mit der Trennschaltung kommunizieren.

Beispielsweise ist es denkbar, daß die mindestens eine Detektorschaltung mittels einer elektrischen Leitung mit der Trennschaltung kommuniziert.

Eine alternative Lösung sieht vor, daß die mindestens eine Detektorschaltung mittels eines Lichtleiters mit der Trennschaltung kommuniziert.

Im Falle des Vorsehens mehrerer Detektorschaltungen wäre es prinzipiell denkbar, daß jede der mehreren Schaltungen mit der Trennschaltung in Verbindung steht und der Trennschaltung ein Signal zum Trennen der Versorgungsleitung von der Stromquelle geben kann. Das heißt, daß in diesem Fall jede der Detektorschaltungen unabhängig von der anderen arbeitet.

Besonders vorteilhaft ist es jedoch, wenn mehrere Detektorschaltungen vorgesehen sind und wenn die Detektorschaltungen miteinander kommunizieren, um eine Veränderung des elektrischen und/oder optischen Verhaltens des Detektorelements zu erfassen. Das heißt, daß in diesem Fall die Detektorschaltungen nicht unabhängig voneinander arbeiten, sondern in einer Art Netzwerk und daß jede der Detektorschaltungen nicht unabhängig von der anderen Detektorschaltung das elektrische und/oder optische Verhalten des Detektorelements überprüft, sondern die Überprüfung durch Kommunikation mindestens zweier Detektorschaltungen erfolgt.

Beispielsweise kann eine derartige Kommunikation dadurch erfolgen, daß eine Detektorschaltung ein Signal absendet, welches die andere Detektorschaltung empfängt.

Je nach dem, ob das Signal angekommen ist oder nicht, kann somit die andere Detektorschaltung erkennen, ob sich das Detektorelement hinsichtlich seines elektrischen und/oder optischen Verhaltens verändert hat.

In diesem Fall kann das Detektorelement entweder direkt mit der Trennschaltung in Wechselwirkung treten oder mit der Detektorschaltung, welche das Signal ausgesendet hat und beispielsweise zu dieser Detektorschaltung wieder ein Bestätigungssignal oder kein Bestätigungssignal zurücksenden, so daß die zunächst aussendende Detektorschaltung dann aufgrund dieser Rückmeldung mit der Trennschaltung kommuniziert.

Die Kommunikation der Detektorschaltungen kann dabei auf unterschiedliche Art und Weise realisiert werden. So sieht eine vorteilhafte Lösung vor, daß die Detektorschaltungen über eine leitungsstranginterne Leitung miteinander kommunizieren.

Diese leitungsstranginterne Leitung kann entweder eine separate, im Leitungsstrang vorgesehene Leitung zur Kommunikation der Detektorschaltungen untereinander sein oder es kann unmittelbar das Detektorelement, insbesondere die Detektorleitung desselben eingesetzt werden, um die Detektorschaltungen miteinander kommunizieren zu lassen.

Alternativ dazu ist es aber auch möglich, daß die Detektorschaltungen über eine leitungsstrangexterne Leitung miteinander kommunizieren.

Eine derartige leitungsstrangexterne Leitung kann eine zusätzliche separate Leitung sein, eine derartige leitungsstrangexterne Leitung kann aber auch eine übliche elektrische oder optische Datenbusleitung sein, wie sie ohnehin in modernen Kraftfahrzeugen vorhanden ist.

Insbesondere können die Detektorschaltungen dabei entweder über eine elektrische Leitung miteinander kommunizieren oder über eine optische Leitung.

Es ist aber auch möglich, daß die Detektorschaltungen in einer Richtung über eine elektrische Leitung, nämlich in einer anderen Richtung über eine optische Leitung miteinander kommunizieren.

Bei einem vorteilhaften Ausführungsbeispiel besteht sogar die Möglichkeit, sowohl eine optische Leitung als auch eine elektrische Leitung in Form einer Detektorleitung im Leitungsstrang vorzusehen, so daß die beiden Detektorleitungen nicht nur die Kommunikation der Detektorschaltungen ermöglichen, sondern gleichzeitig durch Kommunikation über diese Detektorleitungen auch abprüfbar ist, inwieweit sich deren elektrisches und/oder optisches Verhalten ändert.

Um auch die Einwirkung von Bauteilen mit detektorleitungsfremden Potentialen auf das Detektorelement erfassen zu können, ist vorzugsweise vorgesehen, daß die Detektorschaltung das Auftreten eines detektorleitungsfremden Potentials in der Detektorleitung erkennt und nach dem Erkennen desselben die Trennschaltung so ansteuert, daß diese die Versorgungsleitung von der Stromquelle trennt.

Damit besteht die Möglichkeit, eine elektrisch leitende Verbindung mit dem Innenleiter oder auch allen externen detektor- und versorgungsleitungsfremden Potentialen zu erfassen, als fehlerhaften Zustand zu erkennen, und den Innenleiter von der Stromquelle zu trennen. Beispielsweise besteht die Möglichkeit, zwei Spannungsnetze durch das Detektorelement räumlich zu trennen. Ein elektrischer Kontakt zwischen dem Detektorelement und einem fremden Spannungsnetz hat eine Abschaltung von mindestens einem der Spannungsnetze zu Folge.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: eine schematische Darstellung eines ersten Ausführungsbeispiels einer erfindungsgemäßen Lösung bei einem ersten Fehlerfall;
- Fig. 2: eine schematische Darstellung des ersten Ausführungsbeispiels der erfindungsgemäßen Lösung bei einem zweiten Fehlerfall;
- Fig. 3: eine vergrößerte ausschnittsweise Darstellung eines Abschnitts der Leitungsanordnung beim ersten Ausführungsbeispiel;
- Fig. 4: eine Darstellung ähnlich Fig. 3 eines zweiten Ausführungsbeispiels;
- Fig. 5: eine Darstellung eines Detektorelements in Abwicklung des zweiten Ausführungsbeispiels;
- Fig. 6: einen Schnitt längs Linie 6-6 in Fig. 5;
- Fig. 7: einen Schnitt durch ein drittes Ausführungsbeispiel einer erfindungsgemäßen Leitungsanordnung;

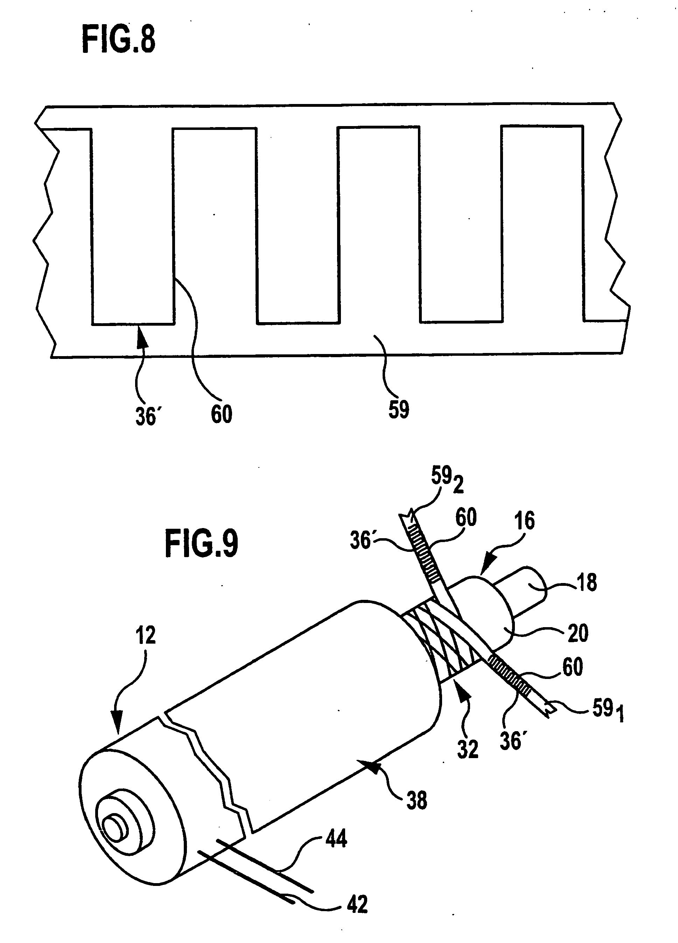

- Fig. 8: eine Darstellung eines Detektorelements eines vierten Ausführungsbeispiels;
- Fig. 9: eine Darstellung eines Leitungsstrangs beim vierten Ausführungsbeispiel;
- Fig. 10: eine Darstellung ähnlich Fig. 4 eines fünften Ausführungsbeispiels mit Darstellung der Auswirkungen eines Lichtbogens;
- Fig. 11: eine Darstellung ähnlich Fig. 1 eines sechsten Ausführungsbeispiels der erfindungsgemäßen Leitungsanordnung;
- Fig. 12: eine Darstellung ähnlich Fig. 1 eines siebten Ausführungsbeispiels der erfindungsgemäßen Leitungsanordnung;
- Fig. 13: eine Darstellung ähnlich Fig. 1 eines achten Ausführungsbeispiels der erfindungsgemäßen Leitungsanordnung;
- Fig. 14: eine Darstellung ähnlich Fig. 1 eines neunten Ausführungsbeispiels der erfindungsgemäßen Leitungsanordnung;
- Fig. 15: eine Darstellung ähnlich Fig. 3 des neunten Ausführungsbeispiels der erfindungsgemäßen Leitungsanordnung und
- Fig. 16: eine Darstellung-ähnlich Fig. 1 eines zehnten Ausführungsbeispiels der erfindungsgemäßen Leitungsanordnung;

Ein erstes Ausführungsbeispiel einer erfindungsgemäßen Leitungsanordnung, insbesondere für Bordnetze von Fahrzeugen, vorzugsweise von Kraftfahrzeugen, umfaßt einen als Ganzes mit 10 bezeichneten Leitungsstrang mit einer von einem Stromeinspeiseanschluß 12 zu einem Stromabgabeanschluß 14 verlaufenden elektrische Versorgungsleitung 16, welche mindestens einen stromführenden Innenleiter 18 und mindestens einen diesen Innenleiter 18 umgebenden Schutzmantel 20 umfaßt.

Der Stromeinspeiseanschluß 12 ist dabei mit einer als Ganzes mit 22 bezeichneten Trennschaltung verbunden, welche zwischen einer Stromquelle 24 und dem Stromeinspeiseanschluß 12 vorgesehen ist und in der Lage ist, die Versorgungsleitung 16 schnell stromlos zu schalten.

Vorzugsweise arbeitet die Stromquelle 24 bei einer Spannung von mehr als 40 Volt, beispielsweise ungefähr 42 Volt Gleichstrom, so daß auch der Innenleiter 18 der Versorgungsleitung 16 auf dieser Spannung liegt, wenn ein mit dem Stromabgabeanschluß 14 verbundener Verbraucher 26, beispielsweise ein Fahrzeugaggregat, über die Versorgungsleitung 16 betrieben werden soll.

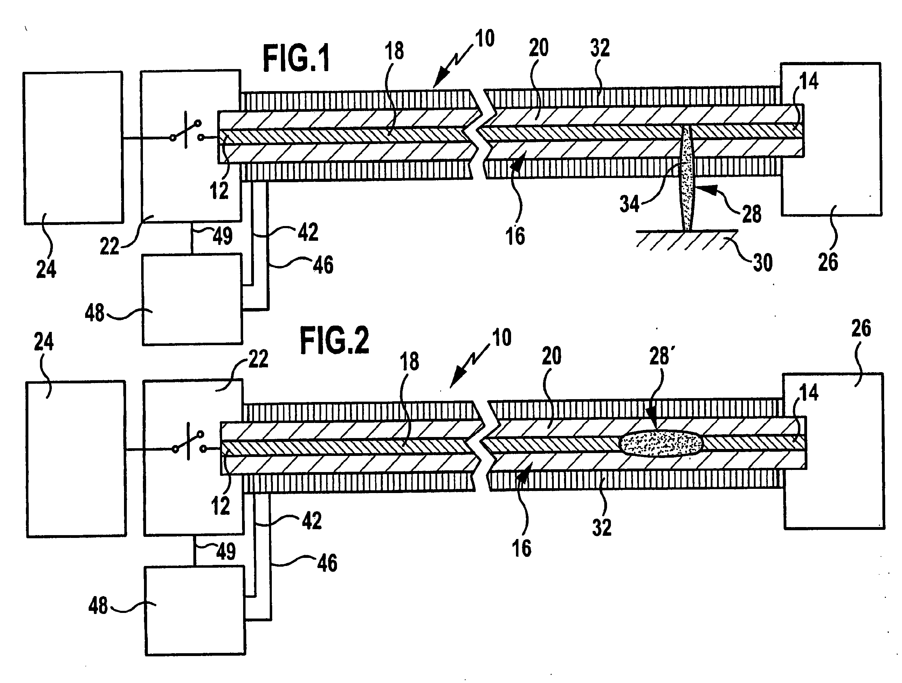

Ist dabei die der Leitungsstrang 10 schadhaft, beispielsweise durch Haarrisse im Mantel des Leitungsstrangs 10, in welche Feuchtigkeit eingedrungen ist, so kann sich an der schadhaften Stelle ein lokaler, sogenannter paralleler Lichtbogen 28 ausbilden, der von dem Innenleiter 18 beispielsweise zu einem Karosserieteil 30 des Fahrzeugs führt, das üblicherweise gegenüber dem Innenleiter 18 auf Masse liegt, dieser Fall wird als erster Fehlerfall bezeichnet und ist in Fig. 1 dargestellt.

Ein zweiter Fehlerfall ist in Fig. 2 dargestellt. Dabei ist der Innenleiter 18 gebrochen. Bei einem Stromfluß über den beschädigten Innenleiter 18 bildet sich an dieser Stelle ein lokaler, sogenannter serieller Lichtbogen 28' aus, der von einem Bruchende des Innenleiters 18 zum gegenüberliegenden Bruchende des Innenleiters 18 führt, wenn sich die Bruchenden noch in unmittelbarer Nähe befinden oder lose berühren.

Ein derartiger Lichtbogen 28 oder 28', der insbesondere bei Spannungen von größer als 20 Volt auftreten kann, kann sehr schnell zu einem Brand des Schutzmantels 20 der Versorgungsleitung 16 oder Schädigung anderer Teile des Fahrzeugs führen.

Aus diesem Grund umfaßt die Leitungsanordnung 10 ein Detektorelement 32, welches sich im wesentlichen vom Stromeinspeiseanschluß 12 bis zum Stromabgabeanschluß 14 erstreckt und außerdem die Versorgungsleitung 16 umschließt.

Das Detektorelement 32 ist dabei so ausgebildet, daß es bei Auftreten eines Lichtbogens 28 oder 28', der das Detektorelement 32 in einem Bereich 34 durchsetzt oder sich innerhalb desselben ausbreitet, in diesem Bereich 34 lokal seine elektrische und/oder optische Leitfähigkeit verändert.

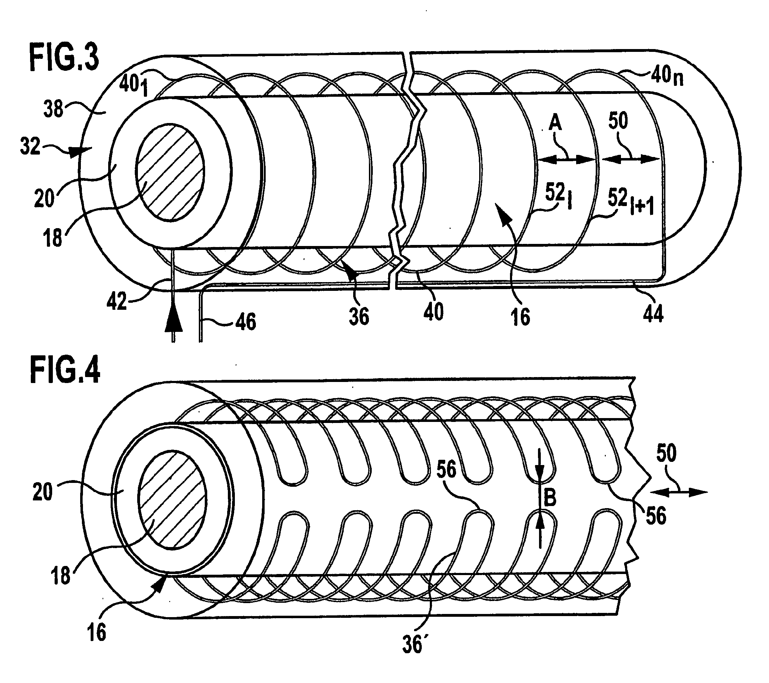

Beispielsweise umfaßt das Detektorelement 32 hierzu, wie in Fig. 3 dargestellt, eine Detektorleitung 36, die gemeinsam mit der Versorgungsleitung 16 in einer Schutzhülle 38 eingebettet ist und wendelförmig mit aufeinanderfolgenden Windungen 40 die Versorgungsleitung 16 über ihre Erstreckung von dem Stromeinspeiseanschluß 12 bis zum Stromabgabeanschluß 14 umgibt.

Von der Detektorleitung 36 ist dabei ein beispielsweise zur ersten Windung 40₁ verlaufendes erstes Anschlußstück 42 aus dem Detektorelement 32 herausgeführt und von der letzten Windung 40ₙ verläuft durch die Schutzhülle 38 eine Rückleitung 44, die wie das erste Anschlußstück 42 nahe des Stromeinspeiseanschlusses 12 als zweites Anschlußstück 46 aus dem Detektorelement 32 herausgeführt ist.

Diese beiden Anschlußstücke 42 und 44 sind, wie in Fig. 1 dargestellt, vorzugsweise mit einer Detektorschaltung 48 verbunden, welche bei auftreten des Lichtbogens 28 in der Lage ist, die Trennschaltung 22 über eine elektrische oder optische Leitung 49 derart anzusteuern, daß diese die Verbindung zwischen dem Stromeinspeiseanschluß 12 und der Stromquelle 24 unterbricht.

Damit über die Detektorleitung 36 in jedem Bereich der Versorgungsleitung 16 die Ausbildung des Lichtbogens 28 oder 28' erfaßt werden kann, ist die Detektorleitung 36 so verlegt, daß quer zu einer Längsrichtung 50 der Versorgungsleitung 16 verlaufende aufeinanderfolgende Abschnitte 52_{I} und 52_{I+1} der Detektorleitung 36 einen Abstand A voneinander aufweisen, der kleiner ist als die Ausdehnung eines sich üblicherweise einstellenden Lichtbogens 28 oder 28', vorzugsweise kleiner als ungefähr der Durchmesser des Innenleiters 18.

Ferner ist die Detektorleitung 36 aus einem Material ausgebildet, welches beim Auftreten des Lichtbogens 28 oder 28' sein elektrisches oder optisches Verhalten irreversibel verändert.

Ist die Detektorleitung 36 beispielsweise als elektrisch leitfähige Leitung ausgebildet, so sieht eine Möglichkeit vor, diese elektrische Leitung in Form eines Metalldrahts auszuführen, wobei ein derartiger Metalldraht aus Metallen der Gruppe der Eutektika, zu der auch Materialien wie Lötzinn gehören, hergestellt ist. Bei derartigen Eutektika läßt sich die Temperatur, ab welcher eine irreversible thermische Zerstörung der Leitung an einer bestimmten Stelle, beispielsweise durch Abschmelzen, erfolgt, durch die Materialzusammensetzung derselben in einfacher Weise einstellen.

Vorzugsweise ist bei Verwendung von Metallen die Materialzusammensetzung so zu wählen, daß diese ab Temperaturen im Bereich von ungefähr 100°C bis ungefähr 500°C, noch besser mehr als 300°C, schmelzen, so daß bei Ausbildung eines Lichtbogens 28 oder 28' der in dem Bereich 34, den der Lichtbogen 28 oder 28' durchsetzt, verlaufende Abschnitt 52 der Detektorleitung 36 so weit erwärmt wird, daß dieser lokal schmilzt und somit das elektrische Verhalten, beispielsweise die elektrische Leitfähigkeit, der Detektorleitung 36 verändert wird. Im einfachsten Fall erfolgt eine irreversible Unterbrechung der Detektorleitung 36 durch lokales Abschmelzen derselben im Bereich 34.

Es ist aber auch denkbar, anstelle eines metallischen Drahtes eine elektrisch leitfähige Kunststoff- oder Polymerfaser als Detektorleitung 36 einzusetzen, welche bei Ausbildung eines Lichtbogens 28 oder 28' innerhalb des Bereichs 34 irreversibel thermisch degradiert und somit ebenfalls zumindest ihre elektrische Leitfähigkeit verändert, insbesondere verringert.

In allen Fällen ist die Detektorschaltung 48 durch Anlegen einer Spannung an die Anschlußstücke 42 und 46 in der Lage, das elektrische Verhalten der Detektorleitung 36 zu überprüfen und Veränderungen, insbesondere Verschlechterungen, der elektrischen Leitfähigkeit, zu erfassen, die ein Indiz für das Auftreten eines Lichtbogens 28 oder 28' sind. In diesen Fällen veranlaßt die Detektorschaltung 48 die Trennschaltung 22 dazu, den Stromeinspeiseanschluß 12 von der Stromquelle 24 zu trennen.

Alternativ zum Vorsehen eines elektrischen Leiters besteht aber auch die Möglichkeit, die Detektorleitung 36 als optische Leitung, insbesondere als Lichtleiter auszuführen.

Vorzugsweise ist ein derartiger Lichtleiter ein Polymerlichtleiter, welcher aus einem Polymer hergestellt ist, dessen optische Transmission sich bei Überschreiten einer Temperaturschwelle, beispielsweise ab einer Temperatur im Bereich von ungefähr 100°C bis ungefähr 500°C, signifikant verschlechtert.

Das Auftreten eines Lichtbogens 28 oder 28' würde dann ebenfalls dazu führen, daß die Transmission der Detektorleitung 36 in dem den Bereich 34 durchsetzenden Abschnitt 52 irreversibel reduziert wird, woraus zwangsläufig eine Reduktion der Transmission der gesamten Detektorleitung 36 folgt.

Die Detektorschaltung 48 ist somit in der Lage, durch Einspeisen von Licht in eines der Anschlußstücke 42 oder 46 und Detektion von Licht am jeweils anderen Anschlußstück 46 bzw. 42 die optische Transmission der Detektorleitung 36 zu erfassen und Veränderungen zu registrieren, die ein Indiz für die Ausbildung eines Lichtbogens 28 oder 28' sind. In diesen Fällen bewirkt die Detektorschaltung 48 durch geeignetes Ansteuern der Trennschaltung 22 ein Trennen des Stromeinspeiseanschlusses 12 von der Stromquelle 24.

Unabhängig von dem Material der Detektorleitung 36 ist es erforderlich, daß das Detektorelement wasserunempfindlich, mikrobiologisch beständig, flammenwidrig, lichtbeständig, schwingungsfest und beständig gegen Reagenzien und Reinigungsmittel, insbesondere Benzin, Diesel, Batteriesäure, Bremsflüssigkeit, Konservierungsmittel, Reinigungsmittel oder Öl, jeweils bei höchster Betriebstemperatur, ist.

Bei einem zweiten Ausführungsbeispiel des erfindungsgemäßen Detektorelements 32', dargestellt in Fig. 3, 4 und 5 verläuft die Detektorleitung 36' nicht gewendelt um die Versorgungsleitung 16 herum, sondern in Form von in der Längsrichtung 50 der Versorgungsleitung 16 aufeinanderfolgenden und die Versorgungsleitung 16 azimutal im wesentlichen umschließenden Mäandern 54, die - wie in Fig. 4 in Abwicklung dargestellt - in der Längsrichtung 50 nebeneinanderliegen, wobei die quer zur Längsrichtung 50 verlaufenden aufeinanderfolgenden Abschnitte 52_{I} und 52_{I+1} ebenfalls einen Abstand A voneinander aufweisen, der kleiner ist als die Ausdehnung des sich üblicherweise einstellenden Lichtbogens 28, vorzugsweise kleiner als ungefähr der Durchmessers des Innenleiters 18.

Außerdem weisen Bogenstücke 56 der Mäander 54 in Azimutalrichtung zur Versorgungsleitung 16 ebenfalls ein Abstand B voneinander auf, der kleiner ist als die Ausdehnung des sich üblicherweise einstellenden Lichtbogens 28, insbesondere kleiner als ungefähr der Durchmesser des Innenleiters 18.

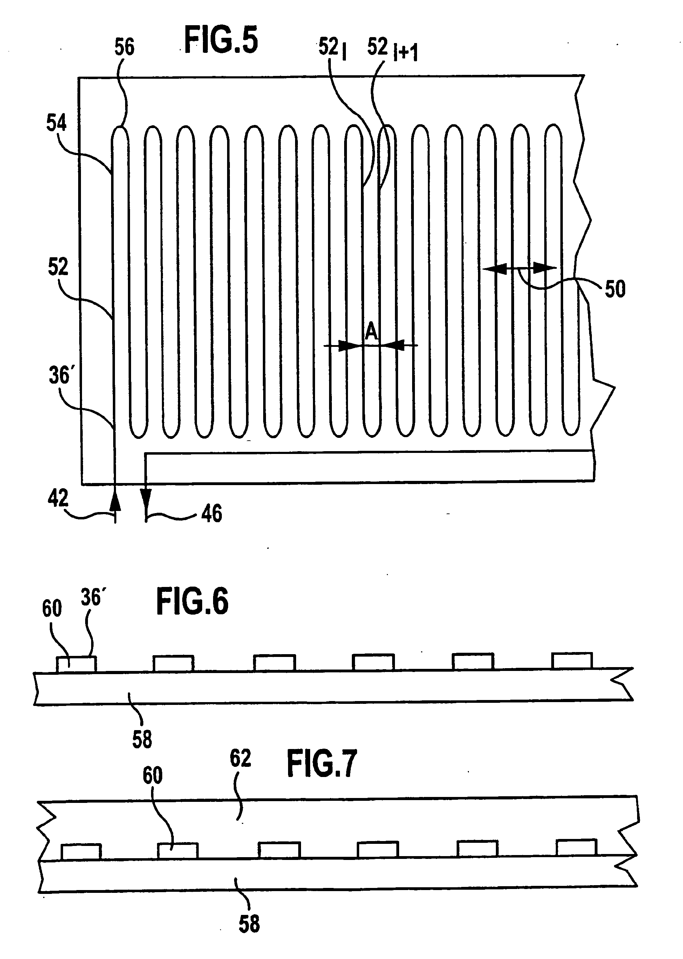

Eine derartige in Form aufeinanderfolgender Mäander 54 ausgeführte Detektorleitung 36' läßt sich, wie in Fig. 5 dargestellt, vorzugsweise dadurch herstellen, daß auf einen Träger 58 die Detektorleitung 36' bildende Bahnen 60 aufgetragen werden, beispielsweise in Form von elektrisch leitfähigen Bahnen entweder aus einem Metall, insbesondere aus einem Metall aus der Gruppe der Eutektika, oder aus einem elektrisch leitfähigen Kunststoff oder Polymer.

Ein derartiges Auftragen der Bahnen 60 auf dem Träger 58 kann durch bekannte Masken- oder Sputtertechniken bei Ausbreitung des Trägers 58 in einer Fläche erfolgen, so daß der Träger nach Auftragen der Bahnen 60 um die mindestens eine Versorgungsleitung 16 herumgewickelt werden kann.

Bei einem dritten, bevorzugten Ausführungsbeispiel, dargestellt in Fig. 6, besteht auch noch die Möglichkeit, die auf dem Träger 58 aufgetragenen Bahnen 60 durch eine Deckschicht 62 zu schützen, welche als Folie oder beispielsweise in flüssigem Aggregatzustand auf den mit den Bahnen 60 versehenen Träger 58 aufgetragen werden kann.

Auch bei dem dritten Ausführungsbeispiel kann die Detektorleitung 36' grundsätzlich als elektrische Leitung oder als optische Leitung ausgeführt sein, wobei in jedem Fall deren Verhalten bei Auftreten des Lichtbogens 28 irreversible Veränderungen erfährt, um diese mittels der Detektorschaltung 48 erfassen zu können.

Bei einem vierten Ausführungsbeispiel, welches auf dem Prinzip des dritten Ausführungsbeispiels beruht, sind zur Ausbildung der Detektorleitung 36' die Bahnen 60 auf einem Trägerstreifen 59 aufgetragen und in gleicher Weise wie beim dritten Ausführungsbeispiel durch eine Deckschicht 62 in der Breite des Trägerstreifens 59 abgedeckt.

Zur Ausbildung des Detektorelements 32 werden nun zwei Trägerstreifen 59₁ und 59₂ über Kreuz, das heißt mit entgegengesetzter Wickelrichtung auf den Schutzmantel 20 des Innenleiters 18 aufgewickelt und in gleicher Weise wie auch beim ersten Ausführungsbeispiel in die Schutzhülle 38 mitsamt der Versorgungsleitung 16 eingebettet.

Die Detektorleitungen 36' der Trägerstreifen 59₁ und 59₂ sind dabei jeweils mit einem der Anschlußstücke 42 bzw. 44 auf seiten des Stromeinspeiseanschlusses 12verbunden und im Bereich des Stromabgabeanschlusses 14 sind die Detektorleitungen 36' unmittelbar miteinander verbunden, so daß die auf den Trägerstreifen 59₁ und 59₂ vorgesehenen Detektorleitungen 36' zwischen den Anschlußstücken 42 und 44 hintereinander in Serie geschaltet sind und auch die Rückleitung 44 entfallen kann, da eine der Detektorleitungen 36' selbst die Rückleitung bildet.

Mit derartigen, auf den Trägerstreifen 59₁ und 59₂ angeordneten Detektorleitungen 36' läßt sich einerseits eine optimale Überdeckung der Versorgungsleitung 16 und andererseits eine optimale Herstellbarkeit eines erfindungsgemäßen Leitungsstrangs 10 erreichen.

In gleicher Weise wie bei den voranstehenden Ausführungsbeispielen können die Detektorleitungen 36' sowohl elektrische als auch optische Leitungen sein.

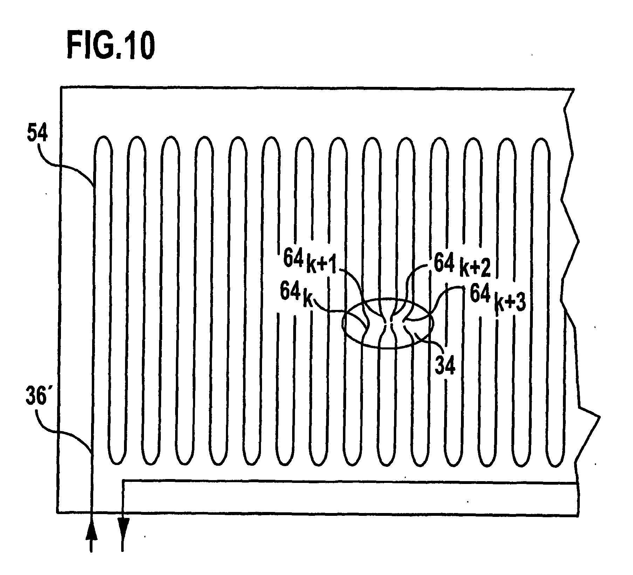

Bei einem fünften Ausführungsbeispiel, das auf dem Grundprinzip des zweiten Ausführungsbeispiels basiert, ist, wie in Fig. 10 dargestellt, der Träger 58 aus einem bei Auftreten des Lichtbogens 28 innerhalb des Bereichs 34 stark formverändernden, beispielsweise kontrahierenden Material hergestellt, das dazu führt, daß durch die Formveränderung des Trägers 58 innerhalb des Bereichs 34 liegende Abschnitte 64ₖ bis 64ₖ₊₃ der Detektorleitung 36 derart großen mechanischen Beanspruchungen unterworfen werden, daß die Detektorleitung 36 in diesen Abschnitten 64 ihr elektrisches oder optisches Verhalten stark verändert, im Extremfall reißt, was insbesondere das elektrische oder optische Verhalten der Detektorleitung 36' irreversibel verändert.

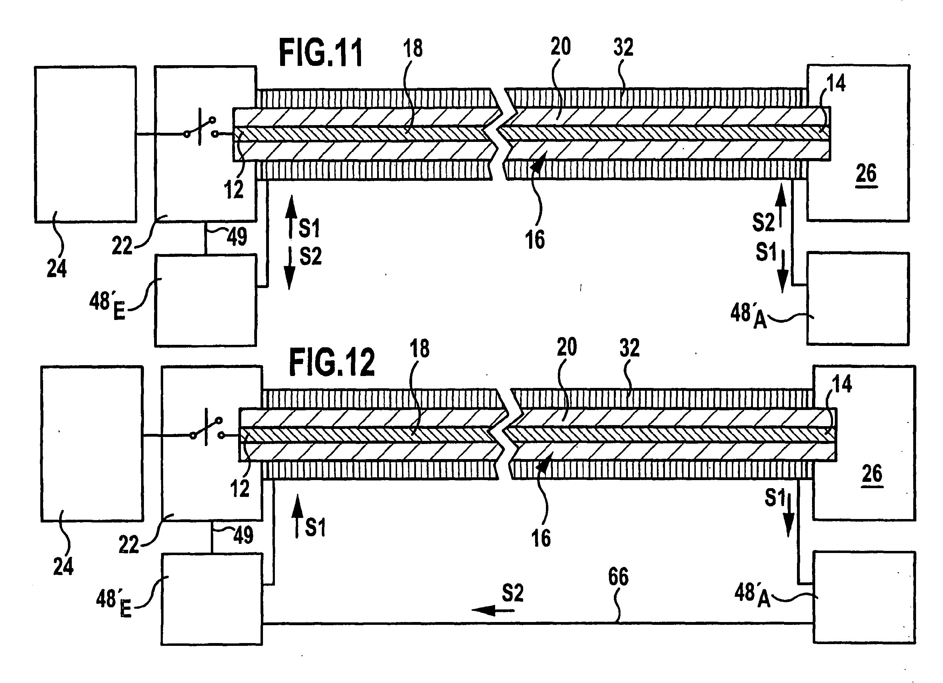

Bei einem sechsten Ausführungsbeispiel, dargestellt in Fig. 11, ist - alternativ zu den einfachsten und kostengünstigsten Ausführungsbeispielen mit nur einer Detektorschaltung 48 - sowohl dem Stromeinspeiseanschluß 12 als auch dem Stromabgabeanschluß 14 der Versorgungsleitung 16 je eine Detektorschaltung 48'_{E} bzw. 48'_{A} zugeordnet, wobei die Detektorschaltungen 48'_{E} und 48'_{A} miteinander kommunizieren.

So ist es zum Beispiel vorgesehen, daß, wie in Fig. 11 dargestellt, die Detektorschaltung 48'_{E} ein Detektorsignal S1 über das Detektorelement 32 vom Stromeinspeiseanschluß 12 zum Stromabgabeanschluß 14 schickt, welches die Detektorschaltung 48'_{A} empfängt und daraufhin ihrerseits ein Detektorsignal S2 generiert, über das Detektorelement 32 schickt, so daß dieses von der Detektorschaltung 48'_{E} empfangen wird.

Ist das elektrische und/oder optische Verhalten des Detektorelements 32 irreversibel geändert, insbesondere gestört, so empfängt bereits die Detektorschaltung 48'_{A} das Detektorsignal S1 nicht in der vorgesehenen Qualität oder überhaupt nicht und generiert ihrerseits kein Detektorsignal S2, so daß die Detektorschaltung 48'_{E} kein Detektorsignal S2 empfängt und hieraus das Auftreten des Lichtbogens 28 erkennt und somit die Trennschaltung 22 veranlaßt, den Stromeinspeiseanschluß 12 von der Stromquelle 24 zu trennen.

Die ausgesandten Signale S1 und S2 können dabei elektrische oder optische Detektorsignale sein, so daß die das Signal S1 übertragende Detektorleitung 36 des Detektorelements 32 eine elektrische oder eine optische Leitung darstellen kann und unabhängig davon die das Signal S2 übertragende Rückleitung 44, die aber auch eine weitere Detektorleitung 36 sein kann, wie beispielsweise bei dem vierten Ausführungsbeispiel, ebenfalls eine elektrische oder optische Leitung sein kann

Bei einem siebten Ausführungsbeispiel, dargestellt in Fig. 12, ist alternativ zum Zurücksenden des Detektorsignals S2 über das Detektorelement 32 eine zusätzliche extern des Leitungsstrangs 10 verlaufende Leitung 66 vorgesehen, über welche die Detektorschaltung 48'_{A} das Detektorsignal S2 zur Detektorschaltung 48'_{E} zurücksendet.

Diese zusätzliche Leitung 66 kann eine zusätzliche in der Leitungsanordnung vorgesehene Leitung sein, aber auch eine separat von dieser verlaufende Leitung, beispielsweise ein elektrischer oder optischer Datenbus, der ohnehin in einem Fahrzeug vorhanden ist.

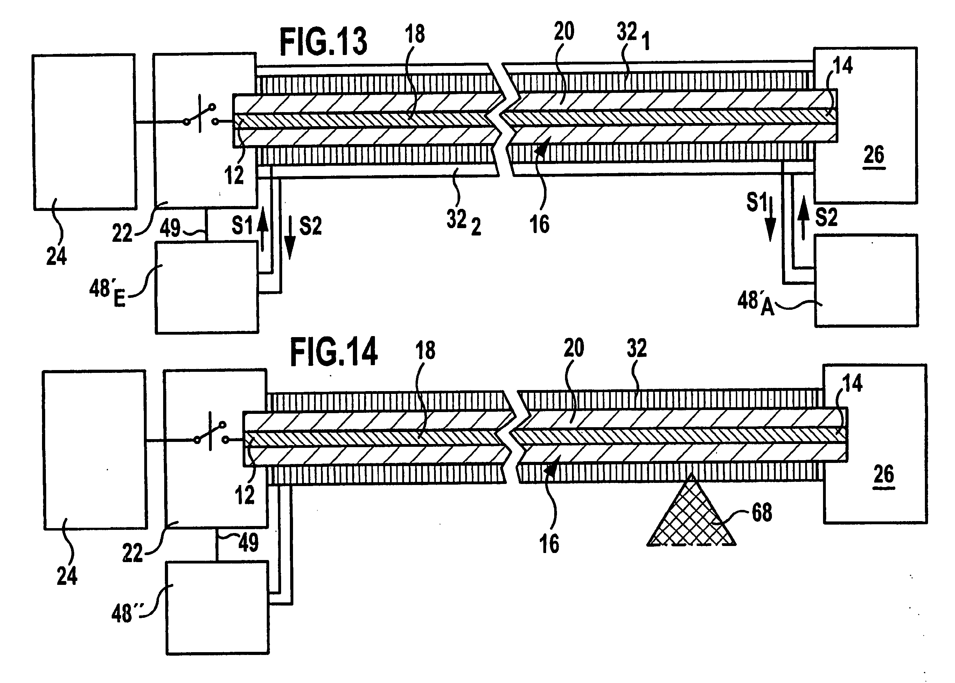

Bei einem achten Ausführungsbeispiel, dargestellt in Fig. 13, sind in dem Leitungsstrang 10 zwei Detektorelemente 32₁ und 32₂ vorgesehen, wobei beispielsweise über das Detektorelement 32₁ das Detektorsignal S1 von der Detektorschaltung 48'_{E} zur Detektorschaltung 48'_{A} gesandt wird, während das Detektorsignal S2 über das Detektorelement 32₂ von der Detektorschaltung 48'_{A} zur Detektorschaltung 48'_{E} gesandt wird.

Dabei können die Detektorelemente 32₁ und 32₂ jeweils nur einen Teilbereich der Versorgungsleitung 16 in Azimutalrichtung umfassen und sich insgesamt soweit ergänzen, daß die Versorgungsleitung 16 in Azimutalrichtung vollständig erfaßt ist, wie beispielsweise beim vierten Ausführungsbeispiel, oder die Detektorelemente 32₁ und 32₂ bilden insgesamt ein redundantes System, und umschließen beide die Versorgungsleitung 16 im wesentlichen vollständig.

Bei dem achten Ausführungsbeispiel besteht die Möglichkeit, beide Detektorelemente 32₁ und 32₂ so auszuführen, daß sie eine Detektorleitung 36 aufweisen, die bei beiden eine elektrische oder bei beiden eine optische Leitung ist.

Es besteht aber auch die Möglichkeit, die Detektorleitung 36 des einen Detektorelements, beispielsweise des Detektorelements 32₁, als optische Leitung auszuführen und die Detektorleitung 36 des Detektorelements 32₂ als elektrische Leitung, so daß die Detektorelemente 32₁ und 32₂ so ausgebildet werden können, daß das Auftreten des Lichtbogens 28 zumindest in einem derselben zu einer Veränderung des elektrischen Verhaltens und in dem anderen derselben zu einer Veränderung des optischen Verhaltens führt.

Bei einem neunten Ausführungsbeispiel einer erfindungsgemäßen Leitungsanordnung, dargestellt in Fig. 14, kann in Ergänzung zu den bislang beschriebenen Ausführungsbeispielen die Detektorschaltung 48" derart modifiziert werden, daß diese nicht nur eine Veränderung in der elektrischen und/oder optischen Fähigkeit zur Durchleitung von Detektorsignalen erkennt, sondern auch noch zusätzlich eine Veränderung eines elektrischen Potentials des Detektorelements 32.

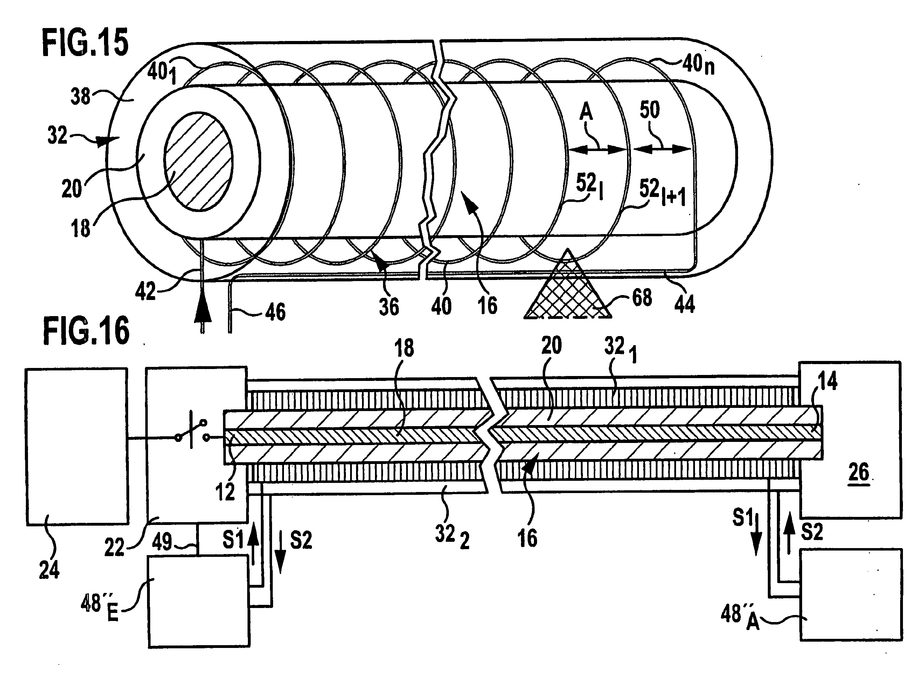

Wird beispielsweise das Detektorelement 32 durch ein Karosserieteil 68 beschädigt, so entsteht, wie in Fig. 15 nochmals verdeutlicht, ein elektrischer Kontakt zwischen dem Karosserieteil 68 und der Detektorleitung 36, wobei aufgrund der Tatsache, daß das Karosserieteil 68 beispielsweise auf Masse liegt, auch die Detektorleitung 36 ihr Potential derart verändert, daß diese auf einem Potential nahe Masse liegt, wobei dieses Potential von dem Übergangswiderstand zwischen der Detektorleitung 36 und dem Karosserieteil 68 abhängt.

Ist nun die Detektorschaltung 48" so ausgebildet, daß sie nicht nur die elektrische Leitfähigkeit des Detektorelements 32 prüft, sondern auch dessen Potential bezüglich Masse, so erkennt die Detektorschaltung 48" die Beschädigung des Detektorelements 32 und wird somit ebenfalls die Trennschaltung 22 veranlassen, den Stromeinspeiseanschluß 12 von der Stromquelle 24 zu trennen.

Eine derartige Potentialerkennung läßt sich bei einem zehnten Ausführungsbeispiel, wie in Fig. 16 dargestellt, auch dann realisieren, wenn sowohl dem Stromeinspeiseanschluß 12 als auch dem Stromabgabeanschluß 14 jeweils eine Detektorschaltung 48" zugeordnet ist, nämlich die Detektorschaltung 48"_{E} und die Detektorschaltung 48"_{A}. Erkennen beide Detektorschaltungen 48"_{E} und 48"_{A} auch eine Veränderung des Potentials des jeweiligen Detektorelements 32₁ oder 32₂ so können auch mechanische Beschädigungen, beispielsweise ausgelöst von dem auf Masse liegenden Karosserieteil 68, erkannt und aufgrund dieser der Stromeinspeiseanschluß 12 von der Stromquelle 24 durch die Trennschaltung 22 getrennt werden.

Besonders vorteilhaft läßt sich bei dieser Lösung die Kombination von optisch arbeitenden und elektrisch arbeitenden Detektorelementen 32 realisieren, so daß beispielsweise das Detektorelement 32₁ auf einen Lichtbogen durch Veränderung des optischen Verhaltens reagiert, während das Detektorelement 32₂ auf einen Lichtbogen durch Verändern seines elektrischen Verhaltens reagiert. Gleichzeitig wird von den Detektorschaltungen 48" noch erkannt, wenn das Detektorelement 32₂ sein elektrisches Potential aufgrund der Einwirkung des Karosserieteils 68 ändert.

Darüber hinaus besteht bei der erfindungsgemäßen Ausführung der Detektorelemente 32 und unabhängig von ihrer Arbeitsweise stets die Möglichkeit, grobe mechanische Einwirkungen auf den Leitungsstrang 10, insbesondere die Detektorelemente 32, dadurch festzustellen, daß diese mechanischen Einwirkungen in jedem Fall auch zu einer Beschädigung der Detektorleitung 36 und somit zur Änderung von deren elektrischem und/oder optischem Verhalten führt.

## Patentansprüche

1. Leitungsanordnung für Bordnetze von Fahrzeugen, umfassend eine von einem Stromeinspeiseanschluss (12) zu einem Stromabgabeanschluss (14) verlaufende elektrische Versorgungsleitung (16) mit mindestens einem stromführenden Innenleiter (18), mit mindestens einem diesen umgebenden Schutzmantel (20), und mit einem längs der Versorgungsleitung (16) verlaufenden Detektorelement (32), sowie eine mit dem Stromeinspeiseanschluss (12) verbundene Trennschaltung (22), welche bei Veränderung des elektrischen und/oder optischen Verhaltens des Detektorelements (32) den stromführenden Innenleiter (18) von einer Stromquelle (24) trennt
**dadurch gekennzeichnet, dass** das längs der Versorgungsleitung (16) verlaufende Detektorelement (32) aus einem Material besteht, dessen elektrische und/oder optische Leitfähigkeit beim Auftreten eines vom stromführenden Innenleiter (18) ausgehenden lokalen Lichtbogens (28, 28') aufgrund eines lokalen Eintrags einer vom Lichtbogen (28, 28') erzeugten Wärmemenge irreversibel verändert wird.

2. Leitungsanordnung nach einem der voranstehenden Ansprüche, **dadurch gekennzeichnet, dass** das Detektorelement (32) so ausgebildet ist, dass es bei lokaler thermischer Einwirkung sein elektrisches und/oder optisches Verhalten irreversibel verschlechtert.

3. Leitungsanordnung nach Anspruch 1 oder 2, **dadurch gekennzeichnet, dass** das Detektorelement (32) die Versorgungsleitung (16) umgibt.

4. Leitungsanordnung nach einem der voranstehenden Ansprüche, **dadurch gekennzeichnet, dass** das Detektorelement (32) mindestens eine elektrische und/oder optische Detektorleitung (36) umfasst, deren elektrisches und/oder optisches Verhalten beim Auftreten des Lichtbogens (28, 28') irreversibel verändert wird.

5. Leitungsanordnung nach Anspruch 4, **dadurch gekennzeichnet, dass** die Detektorleitung (36) in Form einer Wendel (40) verläuft.

6. Leitungsanordnung nach Anspruch 4, **dadurch gekennzeichnet, dass** die Detektorleitung (36) in Form von Mäandern (54) verläuft.

7. Leitungsanordnung nach einem der Ansprüche 4 bis 6, **dadurch gekennzeichnet, dass** in Längsrichtung (50) der Versorgungsleitung (16) aufeinanderfolgende und quer zu einer Längsrichtung (50) der Versorgungsleitung (16) verlaufende Abschnitte (52) der Detektorleitung (36) einen Abstand (A) voneinander aufweisen, der kleiner ist als ungefähr der Durchmesser des Innenleiters (18).

8. Leitungsanordnung nach einem der voranstehenden Ansprüche, **dadurch gekennzeichnet, dass** die Detektorleitung (36) aus einem Material besteht, das seine elektrische und/oder optische Leitfähigkeit ab einer Schwellentemperatur, die im Bereich von ungefähr 100°C bis ungefähr 500°C liegt, irreversibel verändert.

9. Leitungsanordnung nach einem der voranstehenden Ansprüche, **dadurch gekennzeichnet, dass** die Detektorleitung (36) von einer isolierenden Schutzhülle (38, 58, 62) umgeben ist.

10. Leitungsanordnung nach einem der voranstehenden Ansprüche, **dadurch gekennzeichnet, dass** das Detektorelement (32) einen Träger (58) aufweist, an welchem die Detektorleitung (36) gehalten ist.

11. Leitungsanordnung nach Anspruch 10, **dadurch gekennzeichnet, dass** die Detektorleitung (36) in Form von Leitungsbahnen (60) auf einem Träger (58) angeordnet ist.

12. Leitungsanordnung nach Anspruch 11, **dadurch gekennzeichnet, dass** die Leitungsbahnen (60) mäanderähnlich auf dem Träger (58) verlaufen.

13. Leitungsanordnung nach Anspruch 11 oder 12, **dadurch gekennzeichnet, dass** der Träger (58) in Form eines Trägerstreifens (59) ausgebildet ist.

14. Leitungsanordnung nach Anspruch 13, **dadurch gekennzeichnet, dass** der Trägerstreifen (59) wendelförmig um die Versorgungsleitung (16) herum verläuft.

15. Leitungsanordnung nach einem der Ansprüche 11 bis 14, **dadurch gekennzeichnet, dass** der Träger (58) die Versorgungsleitung (16) zumindest teilweise umgibt.

16. Leitungsanordnung nach einem der Ansprüche 11 bis 14, **dadurch gekennzeichnet, dass** der Träger (58) die Versorgungsleitung (16) im Wesentlichen vollständig umschließt.

17. Leitungsanordnung nach einem der Ansprüche 11 bis 16, **dadurch gekennzeichnet, dass** der Träger (58) Teil einer Schutzhülle für die Detektorleitung (36) bildet.

18. Leitungsanordnung nach einem der voranstehenden Ansprüche, **dadurch gekennzeichnet, dass** der Träger (58) aus einem Material besteht, das sich bei Einwirkung des von dem Innenleiter (18) ausgehenden Lichtbogens irreversibel verändert.

19. Leitungsanordnung nach Anspruch 18, **dadurch gekennzeichnet, dass** der Träger (58) aus einem Material besteht, das sich bei Einwirkung des von dem Innenleiter (18) ausgehenden Lichtbogens (28, 28') irreversibel verformt.

20. Leitungsanordnung nach Anspruch 18 oder 19, **dadurch gekennzeichnet, dass** der Träger (58) aus einem Material besteht, das bei Einwirkung des von dem Innenleiter (18) ausgehenden Lichtbogens (28) irreversibel zerfällt.

21. Leitungsanordnung nach einem der Ansprüche 18 bis 20, **dadurch gekennzeichnet, dass** der Träger (58) aufgrund seiner irreversiblen Veränderung bei lokaler Einwirkung des Lichtbogens (28, 28') das elektrische und/oder optische Verhalten der Detektorleitung (36) irreversibel verändert.

22. Leitungsanordnung nach Anspruch 21, **dadurch gekennzeichnet, dass** der Träger (58) die Detektorleitung (36) lokal unterbricht.

23. Leitungsanordnung nach einem der voranstehenden Ansprüche, **dadurch gekennzeichnet, dass** das Detektorelement (32) sein elektrisches und/oder optisches Verhalten bei mechanischer Beschädigung irreversibel verändert.

24. Leitungsanordnung nach einem der voranstehenden Ansprüche, **dadurch gekennzeichnet, dass** das Detektorelement sein elektrisches und/oder optisches Verhalten bei mechanischer Beschädigung desselben durch ein auf versorgungsleitungsfremdem Potential liegendes mechanisches Bauteil (68) verändert.

25. Leitungsanordnung nach Anspruch 23 oder 24, **dadurch gekennzeichnet, dass** Detektorleitung (36) ihr elektrisches und/oder optisches Verhalten bei mechanischer Beschädigung des Detektorelements (32) irreversibel verändert.

26. Leitungsanordnung nach Anspruch 25, **dadurch gekennzeichnet, dass** die Detektorleitung (36) ihr Verhalten hinsichtlich der Durchleitung elektrischer und/oder optischer Signale bei mechanischer Beschädigung irreversibel verschlechtert.

27. Leitungsanordnung nach einem der voranstehenden Ansprüche, **dadurch gekennzeichnet, dass** die Detektorleitung (36) in einem versorgungsleitungsspezifischen Stromkreis liegt.

28. Leitungsanordnung nach einem der voranstehenden Ansprüche, **dadurch gekennzeichnet, dass** mindestens eine Detektorschaltung (48) vorgesehen ist, welche die Trennschaltung (22) ansteuert.

29. Leitungsanordnung nach Anspruch 28, **dadurch gekennzeichnet, dass** die Detektorschaltung (48) dem Stromeinspeiseanschluss (12) zugeordnet ist.

30. Leitungsanordnung nach Anspruch 28, **dadurch gekennzeichnet, dass** die Detektorschaltung (48) dem Stromabgabeanschluss (14) zugeordnet ist.

31. Leitungsanordnung nach einem der Ansprüche 28 bis 30, **dadurch gekennzeichnet, dass** die Detektorschaltung (48) mittels einer elektrischen Leitung (49) mit der Trennschaltung (22) kommuniziert.

32. Leitungsanordnung nach einem der Ansprüche 28 bis 30, **dadurch gekennzeichnet, dass** die Detektorschaltung (48) mittels eines Lichtleiters (49) mit der Trennschaltung (22) kommuniziert.

33. Leitungsanordnung nach einem der Ansprüche 28 bis 32, **dadurch gekennzeichnet, dass** mehrere Detektorschaltungen (48) vorgesehen sind und dass die Detektorschaltungen (48) miteinander kommunizieren, um eine Veränderung des elektrischen und/oder optischen Verhaltens des Detektorelements (32) zu erfassen.

34. Leitungsanordnung nach Anspruch 33, **dadurch gekennzeichnet, dass** die Detektorschaltungen (48) über eine leitungsstranginterne Leitung (32, 44) miteinander kommunizieren.

35. Leitungsanordnung nach Anspruch 33 oder 34, **dadurch gekennzeichnet, dass** die Detektorschaltungen (48) über eine leitungsstrangexterne Leitung (66) miteinander kommunizieren.

36. Leitungsanordnung nach einem der Ansprüche 33 bis 35, **dadurch gekennzeichnet, dass** die Detektorschaltungen (48) über eine elektrische Leitung miteinander kommunizieren.

37. Leitungsanordnung nach einem der Ansprüche 33 bis 36, **dadurch gekennzeichnet, dass** die Detektorschaltungen (48) über eine optische Leitung miteinander kommunizieren.

38. Leitungsanordnung nach einem der Ansprüche 28 bis 37, **dadurch gekennzeichnet, dass** die Detektorschaltung (48") das Auftreten eines versorgungsleitungsfremden Potentials in der Detektorleitung (36) erkennt.

## Claims

1. A line arrangement for on-board networks of vehicles, comprising an electric supply line (16) that extends from a power input terminal (12) to a power output terminal (14) and includes at least one current-carrying inner conductor (18), enclosed by at least one protective sheath (20), and includes a detector element (32) that extends alongside the supply line (16), and comprising a disconnecting circuit (22) that is connected to the power input terminal (12) and disconnects the current-carrying inner conductor (18) from a power source (24) when the electrical and/or optical characteristics of the detector element (32) change,
**characterized in that** the detector element (32) that extends alongside the supply line (16) consists of a material whose electrical and/or optical conductivity is/are irreversibly changed when there is a local arc (28, 28') originating from the current-carrying inner conductor (18), due to the local action of an amount of heat produced by said arc (28, 28').

2. The line arrangement according to any one of the preceding claims, **characterized in that** the detector element (32) is designed in such a manner that any local application of heat has an irreversible negative effect on its electrical and/or optical characteristics.

3. The line arrangement according to claim 1 or 2, **characterized in that** the detector element (32) encloses the supply line (16).

4. The line arrangement according to any one of the preceding claims, **characterized in that** the detector element (32) comprises at least one electric and/or optical detector line (36) whose electrical and/or optical characteristics is/are irreversibly changed when there is an arc (28, 28').

5. The line arrangement according to claim 4, **characterized in that** the detector line (36) has the shape of a helix (40).

6. The line arrangement according to claim 4, **characterized in that** the detector line (36) has the shape of meanders (54).

7. The line arrangement according to any one of claims 4 to 6, **characterized in that** sections (52) of the detector line (36) that follow one another in the longitudinal direction (50) of the supply line (16) and extend transversely to a longitudinal direction (50) of said supply line (16) are spaced from each other by a distance (A) that is smaller than the approximate diameter of the inner conductor (18).

8. The line arrangement according to any one of the preceding claims, **characterized in that** the detector line (36) consists of a material whose electrical and/or optical conductivity will irreversibly change from a threshold temperature in the range from approximately 100°C to approximately 500°C.

9. The line arrangement according to any one of the preceding claims, **characterized in that** the detector line (36) is enclosed by an insulating protective sheathing (38, 58, 62).

10. The line arrangement according to any one of the preceding claims, **characterized in that** the detector element (32) includes a carrier on which the detector line (36) is held.

11. The line arrangement according to claim 10, **characterized in that** the detector line (36) is arranged on a carrier (58) in the form of conductive pathways (60).

12. The line arrangement according to claim 11, **characterized in that** the conductive pathways (60) extend on the carrier (58) like meanders.

13. The line arrangement according to claim 11 or 12, **characterized in that** the carrier (58) is designed in the form of a carrier strip (59).

14. The line arrangement according to claim 13, **characterized in that** the carrier strip (59) extends around the supply line (16) like a helix.

15. The line arrangement according to any one of claims 11 to 14, **characterized in that** the carrier (58) encloses at least part of the supply line (16).

16. The line arrangement according to any one of claims 11 to 14, **characterized in that** the carrier (58) encloses essentially all of the supply line (16).

17. The line arrangement according to any one of claims 11 to 16, **characterized in that** the carrier (58) forms part of a protective sheathing for the detector line (36).

18. The line arrangement according to any one of the preceding claims, **characterized in that** the carrier (58) consists of a material that will irreversibly change when it is exposed to the arc originating from the inner conductor (18).

19. The line arrangement according to claim 18, **characterized in that** the carrier (58) consists of a material whose shape will irreversibly change when it is exposed to the arc (28, 28') originating from the inner conductor (18).

20. The line arrangement according to claim 18 or 19, **characterized in that** the carrier (58) consists of a material that will irreversibly disintegrate when it is exposed to the arc (28) originating from the inner conductor (18).

21. The line arrangement according to any one of claims 18 to 20, **characterized in that** the carrier (58) irreversibly changes the electrical and/or optical characteristics of the detector line (36), due to its irreversible change caused by the local action of the arc (28, 28').

22. The line arrangement according to claim 21, **characterized in that** the carrier (58) locally interrupts the detector line (36).

23. The line arrangement according to any one of the preceding claims, **characterized in that** the electrical and/or optical characteristics of the detector element (32) will irreversibly change when said detector element it is mechanically damaged.

24. The line arrangement according to any one of the preceding claims, **characterized in that** the electrical and/or optical characteristics of the detector element will change when said detector element is mechanically damaged by a mechanical component (68) to which a potential other than that of the supply line is applied.

25. The line arrangement according to claim 23 or 24, **characterized in that** the electrical and/or optical characteristics of the detector line (36) will irreversibly change when the detector element (32) is mechanically damaged.

26. The line arrangement according to claim 25, **characterized in that** any mechanical damage has an irreversible negative effect on the characteristics of the detector line (36) relating to the transmission of electrical and/or optical signals.

27. The line arrangement according to any one of the preceding claims, **characterized in that** the detector line (36) is located in a supply line-specific circuit.

28. The line arrangement according to any one of the preceding claims, **characterized in that** at least one detector circuit (48) is provided, which controls the disconnecting circuit (22).

29. The line arrangement according to claim 28, **characterized in that** the detector circuit (48) is associated with the power input terminal (12).

30. The line arrangement according to claim 28, **characterized in that** the detector circuit (48) is associated with the power output terminal (14).

31. The line arrangement according to any one of claims 28 to 30, **characterized in that** the detector circuit (48) communicates with the disconnecting circuit (22) by means of an electric line (49).

32. The line arrangement according to any one of claims 28 to 30, **characterized in that** the detector circuit (48) communicates with the disconnecting circuit (22) by means of an optical waveguide (49).

33. The line arrangement according to any one of claims 28 to 32, **characterized in that** several detector circuits (48) are provided and that said detector circuits (48) communicate with each other in order to detect any change of the electrical and/or optical characteristics of the detector element (32).

34. The line arrangement according to claim 33, **characterized in that** the detector circuits (48) communicate with each other via a line (32, 44) that is integrated in the relevant set of lines.

35. The line arrangement according to claim 33 or 34, **characterized in that** the detector circuits (48) communicate with each other via a line (66) that is arranged separately from the relevant set of lines.

36. The line arrangement according to any one of claims 33 to 35, **characterized in that** the detector circuits (48) communicate with each other via an electric line.

37. The line arrangement according to any one of claims 33 to 36, **characterized in that** the detector circuits (48) communicate with each other via an optical waveguide.

38. The line arrangement according to any one of claims 28 to 37, **characterized in that** the detector circuit (48") detects the presence of a potential other than that of the supply line in the detector line (36).

## Revendications

1. Dispositif de lignes pour des tableaux de bord de véhicules, comprenant une ligne d'alimentation (16) électrique allant d'une connexion d'arrivée de courant (12) à une connexion de fourniture de courant (14) avec au moins un conducteur intérieur (18) conduisant le courant, avec au moins une gaine de protection (20) entourant ce conducteur, et avec un élément de détecteur (32) placé le long de la ligne d'alimentation (16), ainsi qu'un sectionnement (22) qui est connecté à la connexion d'arrivée de courant (12) et qui, lors de la modification du comportement électrique et/ou optique de l'élément de détecteur (32), effectue la séparation entre le conducteur intérieur (18) conduisant le courant et une source de courant (24),
**caractérisé en ce que** l'élément de détecteur (32) placé le long de la ligne d'alimentation (16) est composé d'un matériau dont la conductibilité électrique et/ou optique est modifiée de façon irréversible lors de l'apparition d'un arc électrique (28, 28') local sortant du conducteur intérieur (18) conduisant le courant en raison d'une arrivée locale d'une quantité de chaleur produite par l'arc électrique (28, 28').

2. Dispositif de lignes selon une des revendications précédentes, **caractérisé en ce que** l'élément de détecteur (32) est constitué de telle sorte que, en cas d'action thermique locale, son comportement électrique et/ou optique est détérioré de façon irréversible.

3. Dispositif de lignes selon la revendication 1 ou 2, **caractérisé en ce que** l'élément de détecteur (32) entoure la ligne d'alimentation (16).

4. Dispositif de lignes selon une des revendications précédentes, **caractérisé en ce que** l'élément de détecteur (32) comprend au moins une ligne de détecteur (36) électrique et/ou optique dont le comportement électrique et/ou optique est modifié de façon irréversible lors de l'apparition de l'arc électrique (28, 28').

5. Dispositif de lignes selon la revendication 4, **caractérisé en ce que** la ligne de détecteur (36) est en forme de filament spiralé (40).

6. Dispositif de lignes selon la revendication 4, **caractérisé en ce que** la ligne de détecteur (36) est en forme de méandres (54).

7. Dispositif de lignes selon une des revendications 4 à 6, **caractérisé en ce que**, dans la direction longitudinale (50) de la ligne d'alimentation (16), des tronçons (52) de la ligne de détecteur (36) qui se succèdent et qui sont transversaux à une direction longitudinale (50) de la ligne d'alimentation (16) présentent un intervalle (A) entre eux qui est inférieur à environ le diamètre du conducteur intérieur (18).

8. Dispositif de lignes selon une des revendications précédentes, **caractérisé en ce que** la ligne de détecteur (36) est composée d'un matériau qui modifie de façon irréversible sa conductibilité électrique et/ou optique à partir d'une température de seuil qui se situe dans la plage d'environ 100° C à environ 500° C.

9. Dispositif de lignes selon une des revendications précédentes, **caractérisé en ce que** la ligne de détecteur (36) est entourée d'une gaine protectrice (38, 58, 62) isolante.

10. Dispositif de lignes selon une des revendications précédentes, **caractérisé en ce que** l'élément de détecteur (32) présente un support (58) sur lequel la ligne de détecteur (36) est retenue.

11. Dispositif de lignes selon la revendication 10, **caractérisé en ce que** la ligne de détecteur (36) est disposée sous forme de chemins de lignes (60) sur un support (58).

12. Dispositif de lignes selon la revendication 11, **caractérisé en ce que** les chemins de ligne (60) sont disposés à la façon de méandres sur le support (58).

13. Dispositif de lignes selon la revendication 11 ou 12, **caractérisé en ce que** le support (58) est constitué sous forme de bande de support (59).

14. Dispositif de lignes selon la revendication 13, **caractérisé en ce que** la bande de support (59) est placée sous forme de filament spiralé tout autour de la ligne d'alimentation (16).

15. Dispositif de lignes selon une des revendications 11 à 14, **caractérisé en ce que** le support (58) entoure au moins partiellement la ligne d'alimentation (16).

16. Dispositif de lignes selon une des revendications 11 à 14, **caractérisé en ce que** le support (58) entoure la ligne d'alimentation (16) de façon essentiellement complète.

17. Dispositif de lignes selon une des revendications 11 à 16, **caractérisé en ce que** le support (58) forme une partie d'une gaine protectrice pour la ligne de détecteur (36).

18. Dispositif de lignes selon une des revendications précédentes, **caractérisé en ce que** le support (58) se compose d'un matériau qui se modifie de façon irréversible lors de l'action de l'arc électrique sortant du conducteur intérieur (18).

19. Dispositif de lignes selon la revendication 18, **caractérisé en ce que** le support (58) se compose d'un matériau qui se déforme de façon irréversible lors de l'action de l'arc électrique (28, 28') sortant du conducteur intérieur (18).

20. Dispositif de lignes selon la revendication 18 ou 19, **caractérisé en ce que** le support (58) se compose d'un matériau qui se décompose de façon irréversible lors de l'action de l'arc électrique (28) sortant du conducteur intérieur (18).

21. Dispositif de lignes selon une des revendications 18 à 20, **caractérisé en ce que** le support (58) modifie de façon irréversible le comportement électrique et/ou optique de la ligne de détecteur (36) du fait de sa modification irréversible lors de l'action locale de l'arc électrique (28, 28').

22. Dispositif de lignes selon la revendication 21, **caractérisé en ce que** le support (58) interrompt localement la ligne de détecteur (36).

23. Dispositif de lignes selon une des revendications précédentes, **caractérisé en ce que** l'élément de détecteur (32) modifie de façon irréversible son comportement électrique et/ou optique en cas d'endommagement mécanique.

24. Dispositif de lignes selon une des revendications précédentes, **caractérisé en ce que** l'élément de détecteur modifie son comportement électrique et/ou optique en cas d'endommagement mécanique de cet élément par un composant (68) mécanique situé à un potentiel étranger à la ligne d'alimentation.

25. Dispositif de lignes selon la revendication 23 ou 24, **caractérisé en ce que** la ligne de détecteur (36) modifie de façon irréversible son comportement électrique et/ou optique en cas d'endommagement mécanique de l'élément de détecteur (32).

26. Dispositif de lignes selon la revendication 25, **caractérisé en ce que** la ligne de détecteur (36) détériore de façon irréversible son comportement concernant la conduction de signaux électriques et/ou optiques en cas d'endommagement mécanique.

27. Dispositif de lignes selon une des revendications précédentes, **caractérisé en ce que** la ligne de détecteur (36) est située dans un circuit électrique spécifique à la ligne d'alimentation.

28. Dispositif de lignes selon une des revendications précédentes, **caractérisé en ce qu'**il est prévu au moins un circuit de détecteur (48) qui pilote le sectionnement (22).

29. Dispositif de lignes selon la revendication 28, **caractérisé en ce que** le circuit de détecteur (48) est affecté à la connexion d'arrivée de courant (12).

30. Dispositif de lignes selon la revendication 28, **caractérisé en ce que** le circuit de détecteur (48) est affecté à la connexion de fourniture de courant (14).

31. Dispositif de lignes selon une des revendications 28 à 30, **caractérisé en ce que** le circuit de détecteur (48) communique au moyen d'une ligne électrique (49) avec le sectionnement (22).

32. Dispositif de lignes selon une des revendications 28 à 30, **caractérisé en ce que** le circuit de détecteur (48) communique au moyen d'un guide de lumière (49) avec le sectionnement (22).

33. Dispositif de lignes selon une des revendications 28 à 32, **caractérisé en ce qu'**il est prévu plusieurs circuits de détecteur (48), et **en ce que** les circuits de détecteur (48) communiquent entre eux pour détecter une modification du comportement électrique et/ou optique de l'élément de détecteur (32).

34. Dispositif de lignes selon la revendication 33, **caractérisé en ce que** les circuits de détecteur (48) communiquent entre eux par le biais d'une ligne (32, 44) interne au faisceau de lignes.

35. Dispositif de lignes selon la revendication 33 ou 34, **caractérisé en ce que** les circuits de détecteur (48) communiquent entre eux par le biais d'une ligne (66) externe au faisceau de lignes.

36. Dispositif de lignes selon une des revendications 33 à 35, **caractérisé en ce que** les circuits de détecteur (48) communiquent entre eux par le biais d'une ligne électrique.

37. Dispositif de lignes selon une des revendications 33 à 36, **caractérisé en ce que** les circuits de détecteur (48) communiquent entre eux par le biais d'une ligne optique.

38. Dispositif de lignes selon une des revendications 28 à 37, **caractérisé en ce que** le circuit de détecteur (48") détecte l'apparition d'un potentiel étranger à la ligne d'alimentation dans la ligne de détecteur (36).
